# EUROPEAN PATENT APPLICATION

(11) **EP 2 999 061 A1**
(43) Date of publication of application: **23.03.2016**
(21) Application number: 14197185.3
(22) Date of filing: 10.12.2014
(51) Int. Cl.: H01R 13/713, H02J 7/00, B60L 11/18, H01R 24/28, H01R 13/703, H01R 13/707, H01R 13/53

(54) **Apparatus for blocking high voltage source, plug applied to the same, and method for controlling the same**

(30) Priority: 17.09.2014 KR 20140123455
(71) Applicant: Hyundai Motor Company, Seoul 137-938 (KR); Kia Motors Corporation, Seoul 137-938 (KR)
(72) Inventor: Jung, Yun-Jae, 440-854 Gyeonggi-do (KR); Nam, Bum-Woo, 403-818 Incheon (KR)
(74) Representative: Isarpatent

(57) **Abstract**

An apparatus for blocking a high voltage source includes a plug (130) that is inserted into a household socket (111), and a circuit breaker (120) connected to the plug (130) through a power cable (121), where the circuit breaker (120) detects whether or not the plug (130) is detached from the household socket (111) during a slow charging operation, so as to block the power source supplied to a vehicle from the plug (130).
The plug comprising: an electrode terminal (201); a plug pin (410) having a protruding part formed on one end of the plug pin, the protruding part configured to contact a surface of the household socket (lll), and the plug pin being disposed on a lower end of one side of the electrode terminal; an elastic member (420) disposed on a step part of the protruding part so as to provide elastic force to the plug pin which can be reciprocally moved by the elastic force in a transverse direction; and a contact part (430) for being contacted with or detached from the other end of the plug pin to activate or deactivate the contact.

## Description

### BACKGROUND

### (a) Field of the Invention

The present invention relates to an apparatus for blocking a high voltage source, particularly to an apparatus for blocking a high voltage source, in which detachment of a plug of a power cable used for a slow charging operation can be detected to block the power source thereof, a plug applied to the same, and a method for controlling the same.

### (b) Description of the Related Art

Recently, as the problem of global environmental pollution has become more serious, the importance of using clean energy has grown day by day. Especially, the atmospheric pollution problem of certain cities has reached a critical point, and vehicle exhaust is one of the main causes generating such pollution.

Recent studies have advocated for the practical use of green vehicles, for example, electric vehicles using electricity that is clean energy as a power source. Generally, electric vehicles use a battery as a main power source, and an electric motor driven by the battery voltage is applied thereto in order to generate driving power.

An electric motor can function as a motor while being powered from the battery, and also function as a generator during a braking operation of the vehicle, so that the motor can convert renewable energy produced during the braking operation into electric energy to supply the electric energy to the battery as charging voltage.

A battery mounted on an electric vehicle is usually charged by using a commercial power source when State Of Charge (hereinafter referred to as "SOC") on the battery is not sufficient to provide a stable running condition after the vehicle is shut off or during vehicle running.

In the battery charging operation of electric vehicles, there are two types, that is, one is a boosting charging method and another is a slow charging method. In the boosting charging method, during temporary parking of a vehicle, the SOC necessary for rerunning the parked vehicle can be attained by rapidly charging the battery with electric energy within a short time.

Contrary to this, in the slow charging method, the charging operation is slowly performed in a garage when the vehicle is shut off, and the goal of this method is to fully charge a battery pack so that the battery may remain in the SOC of 100% charge.

Meanwhile, in case of a PHEV (plug-in hybrid electric vehicle), a household slow charging method may be used among several slow charging methods. Specifically, after a plug of a power cable used for slow charging operation is connected to a household socket, a vehicle connector is connected to an inlet formed in the front of the vehicle so as to charge the vehicle battery.

In the related art, however, there is a disadvantage that when the plug is randomly or carelessly detached from the corresponding socket during the charging operation of the battery, instantaneous arc may occur due to the lack of a separately-prepared means for blocking the power source.

Furthermore, in the related art, there is a disadvantage that the related parts may be damaged by such an occurrence of arc, and/or a user safety problem may occur accordingly.

### SUMMARY

An apparatus is provided for blocking a high voltage source in which the occurrence of arc can be prevented even though a plug is detached from a corresponding socket during a slow charging operation (e.g., in the home), a plug applied to the apparatus, and a method for controlling the apparatus.

An object of the present invention is to provide an apparatus for blocking a high voltage source in which damage of parts caused by the occurrence of arc and/or user safety problems can be prevented so as improve charging safety, a plug applied to the apparatus, and a method for controlling the apparatus.

The present invention includes an apparatus for blocking a high voltage source in which the occurrence of arc can be prevented even though a plug is detached from a corresponding socket during a slow charging operation.

The apparatus for blocking high voltage source may include a plug configured to be inserted into a household socket, and a circuit breaker connected to the plug through a power cable, for detecting whether or not the plug is detached from the household socket during a slow charging operation, to block the power source supplied to a vehicle from the plug.

When inserted into the household socket, the plug may activate a contact to transfer insertion recognition signals to the circuit breaker, whereas when detached from the household socket, the plug may deactivate the contact to transfer detachment recognition signals to the circuit breaker.

The plug may include an electrode terminal, a plug pin having a protruding part formed on one end of the plug pin, the protruding part capable of contacting a surface of the household socket, and the plug pin being disposed on a lower end of one side of the electrode terminal, an elastic member disposed on a step part of the protruding part, for providing elastic force to the plug pin which can be reciprocally moved by the elastic force in the transverse direction, and a contact part for being contacted with or detached from the other end of the plug pin to activate or deactivate the contact.

The circuit breaker may include a switch connected to a vehicle battery power line, for blocking or connecting the power source supplied to the vehicle from the plug, and a controller connected to the plug through a plug pin signal line, for controlling on/off of the switch in response to the insertion recognition signals or the detachment recognition signals.

The switch may include a power relay.The elastic member may include a spring.

The present invention also relates to a plug applied to an apparatus for blocking a high voltage source that may include an electrode terminal, a plug pin having a protruding part formed on one end of the plug pin, the protruding part capable of being contacted to a surface of the household socket, and the plug pin being disposed on a lower end of one side of the electrode terminal, an elastic member disposed on a step part of the protruding part, for providing elastic force to the plug pin which can be reciprocally moved by the elastic force in the transverse direction, and a contact part for being contacted with or detached from the other end of the plug pin to activate or deactivate the contact.

The present invention further relates to a method for blocking a high voltage source that may include performing a slow charging operation while a plug is inserted into a household socket, detecting, by a circuit breaker connected to the plug through a power cable, whether or not the plug is detached from the household socket, supplying continuously, by the circuit breaker, the power source to a vehicle through the plug, if not detected, and blocking the power source supplied to the vehicle from the plug, if detected.

Other objects and advantages of the present invention can be understood by the following description, and become apparent with reference to the embodiments of the present inventive concept. Also, it is obvious to those skilled in the art to which the present invention pertains that the objects and advantages of the present invention can be realized by the means as claimed and combinations thereof.

### BRIEF DESCRIPTION OF THE DRAWINGS

FIG. 1 is a conceptual view illustrating an apparatus for blocking high voltage source according to an embodiment of the present invention.
FIG. 2 is a conceptual view illustrating an interior of the plug shown in FIG. 1.
FIG. 3 is a perspective view illustrating an appearance of the plug shown in FIG. 1.
FIG. 4 is a sectional view taken along an axis X-X' of the plug shown in FIG. 3.
FIG. 5 is a conceptual sectional view illustrating a state that the plug according to one embodiment of the present invention is inserted into a socket.
FIG. 6 is a conceptual sectional view illustrating a state that the plug according to one embodiment of the present invention is detached from a socket.
FIG. 7 is a circuit-structural view illustrating a circuit of the apparatus for blocking high voltage source according to one embodiment of the present invention.
FIG. 8 is a flow chart illustrating processes through which the detachment of the plug according to one embodiment of the present invention is detected to block the electric power source.

### DETAILED DESCRIPTION

The present invention may be changed or modified in various forms, and thus may have a variety of embodiments embodied in possible different forms of which some specific embodiments are illustrated in the drawings and described concretely in the detailed description. However, the present invention should not be construed as limited to the embodiments set forth herein, but rather, should be understood to include all the possible changes, modifications, equivalents or alternatives the present invention may have in the view of the technical ideals and the scope thereof.

The terminology used herein is for the purpose of describing particular embodiments only and is not intended to be limiting of the invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Throughout the disclosure, like reference numerals refer to like parts throughout the various figures and embodiments of the present invention.

The terminology such as the first, the second and so forth may be used to explain different structural elements, which, however, should not be construed as limited thereto. The used terminology should be intended only to distinguish one from another in the structural elements.

For example, the first element may be referred to as the second element within the scope of the right in the present invention, and similarly, the second element may be referred to as the first element.

Unless otherwise specified, all the terminology used herein, including technical and/or scientific terms, should be understood to have the same meanings as those understood generally by an ordinary person skilled in the art.

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

Further, the control logic of the present invention may be embodied as non-transitory computer readable media on a computer readable medium containing executable program instructions executed by a processor, controller or the like. Examples of computer readable media include, but are not limited to, ROM, RAM, compact disc (CD)-ROMs, magnetic tapes, floppy disks, flash drives, smart cards and optical data storage devices. The computer readable medium can also be distributed in network coupled computer systems so that the computer readable media is stored and executed in a distributed fashion, e.g., by a telematics server or a Controller Area Network (CAN).

Hereinafter, according to exemplary embodiments of the present invention, an apparatus for blocking a high voltage source, a plug applied to the apparatus, and a method for controlling the apparatus will be described below in more detail with reference to the accompanying drawings.

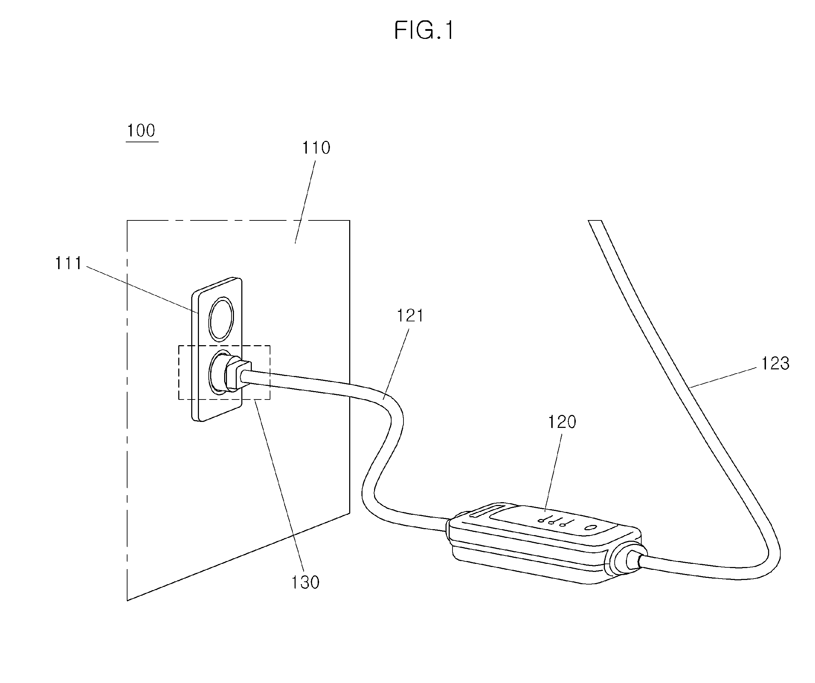

FIG. 1 is a conceptual view illustrating an apparatus 100 for blocking high voltage source according to an embodiment of the present invention. The apparatus 100 for blocking high voltage source includes a plug 130 configured to be inserted into a household socket 111, and a circuit breaker 120 connected to the plug 130 through a power cable 121. The circuit breaker 120 can detect whether or not the plug is detached from the corresponding household socket 111 during slow charging operation, and block a power source supplied to the related vehicle from the plug 130, if detected.

The household socket 111 is disposed on a wall surface 110 to be connected to commercial electricity.

The plug 130 is connected to the circuit breaker 120 through the power cable 121.

The circuit breaker 120 is connected to a vehicle (not shown) through a connecting cable 123. The vehicle may be, for example, a PHEV (Plug-in Hybrid Electric Vehicle), to which, however, the present invention is not limited. More specifically, the present invention may be also applied to a HEV (Hybrid Electric Vehicle), an EV (Electric Vehicle), a NEV (Neighborhood Electric Vehicle), a FCV (Fuel-Cell Vehicle), a CDV (Clean Diesel Vehicle) and so forth, if modified properly in the design thereof according to usages.

The circuit breaker 120 may be ICCBs (Insulated Case Circuit Breakers), PCBs (Power Circuit Breakers), MCCBs (Molded Case Circuit Breakers) and so forth, each of which has a function to automatically block the power source upon occurrence of an overload and/or a short circuit (an accidental case).

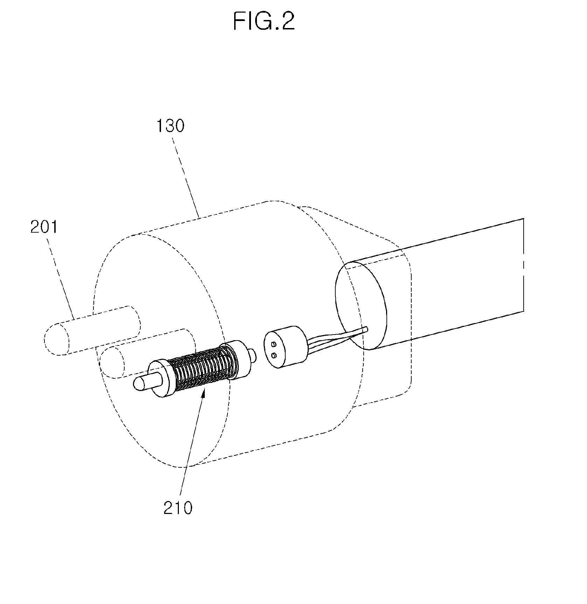

FIG. 2 is a conceptual view illustrating an interior of the plug 130 shown in FIG. 1. With reference to FIG. 2, the plug 130 includes an electrode terminal 201 connected to the power source, and a plug-pin operational structure 210.

When the plug 130 is inserted into the household socket 111 (see FIG. 1), the plug-pin operational structure 210 contacts a surface of the household socket 111 to activate a contact and thus allow the circuit breaker 120 (see FIG. 1) to operate normally. Accordingly, the power source can be normally supplied to a vehicle through the household socket 111.

Contrary to this, if the plug 130 is detached from the household socket 111 (see FIG. 1), then the plug 130 is separated from the surface of the household socket 111 to deactivate the contact, and resultantly turn off the circuit breaker (120 indicated in FIG. 1). Accordingly, the power source connected to the vehicle through the household socket 111 is blocked or cut off.

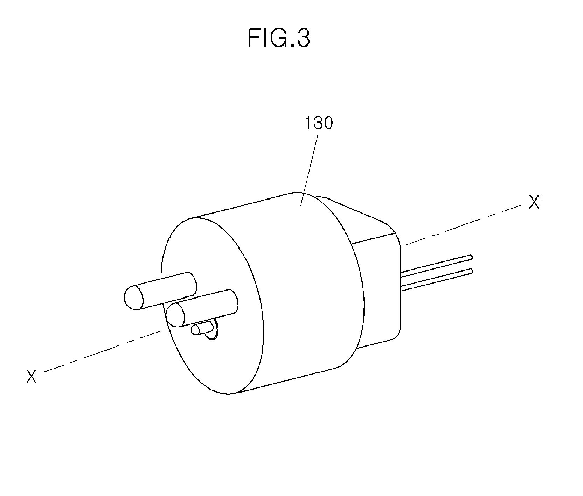

FIG. 3 is a perspective view illustrating an appearance of the plug 130 shown in FIG. 1.

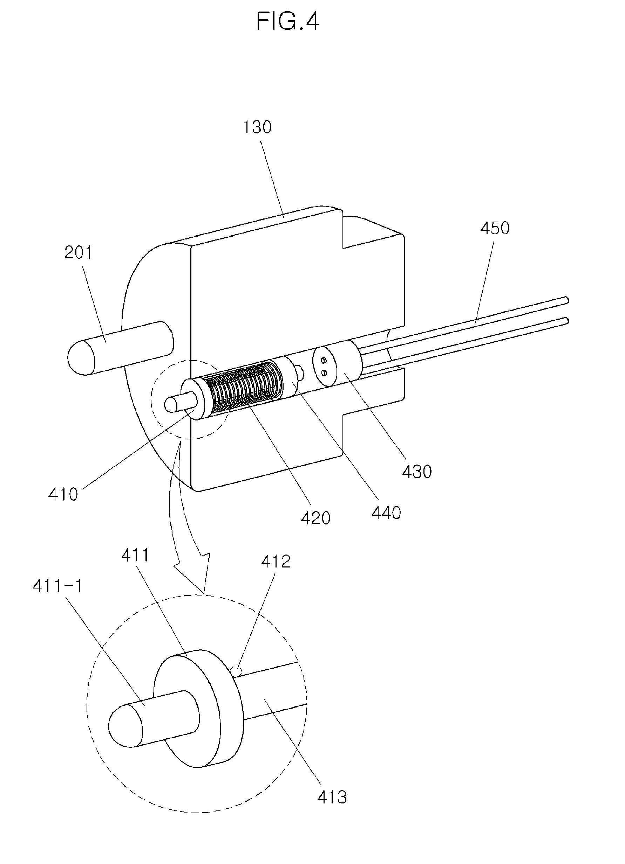

FIG. 4 is a sectional view taken along an axis X-X' of the plug 130 shown in FIG. 3. With reference to FIG. 4, the plug 130 includes a plug pin 410 of which one end is directly contacted with a surface of the household socket 111, an elastic member 420 for providing elastic force to the plug pin 410, a contact part 430 which is contacted or detached with the other end of the plug pin 410 to activate or deactivate the contact and resultantly produce plug insertion recognition signals or plug detachment recognition signals, and plug pin signal lines 450 for transferring the insertion recognition signals or the detachment recognition signals to the circuit breaker 120 (see FIG. 1).

A protruding part 411 having a step portion 412 is formed in the front end of the plug pin 410. The protruding part 411 has a pin 411-1 formed in the front thereof to become a shape "⊥" in section thereof.

The plug pin 410 has, in the rear end thereof, a movable part 413 having a bar type shape to allow the elastic member 420 to be mounted thereon. As shown in FIG. 4, the movable part 413 has a circular shape. However, the movable part 413 may have various shapes such as rectangular form, octagonal form and so forth. Further, the movable part 413 may be made of metallic material in order to produce signals in response to the corresponding contact of the movable part 413. Furthermore, the movable part 413 may have the same material as that of the pin 411-1.

The rear end of the plug pin 410 is assembled to a guide part 440 preferably having a hollow shape. Accordingly, the movable part 413 may be reciprocally movable on the guide part 440.

The elastic member 420 may include a spring, to which, however, the elastic member 420 is not limited, but may include rubber parts, sponges and so forth.

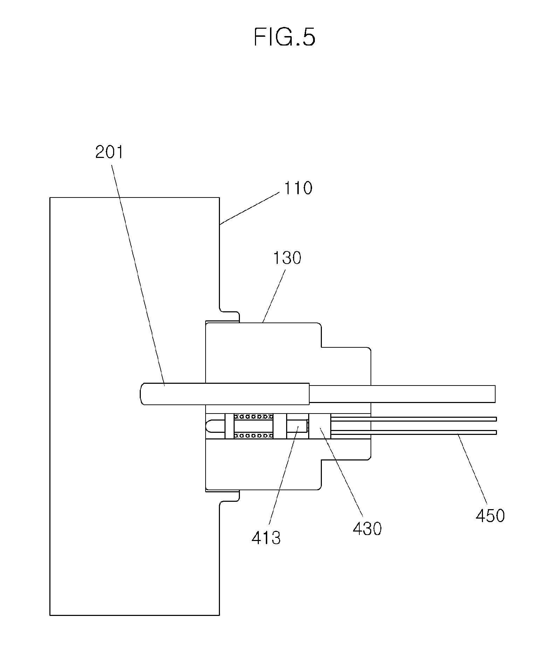

FIG. 5 is a conceptual sectional view illustrating a state that the plug according to one embodiment of the present invention is inserted into a socket. With reference to FIG. 5, the plug 130 has been inserted into the household socket 111 in order to carry out the charging operation. This stage corresponds to a state that the movable part 413 has been contacted to the contact part 430 to activate the contact through which an electric current is being applied. As a result, the insertion recognition signals of the plug 130 should be produced.

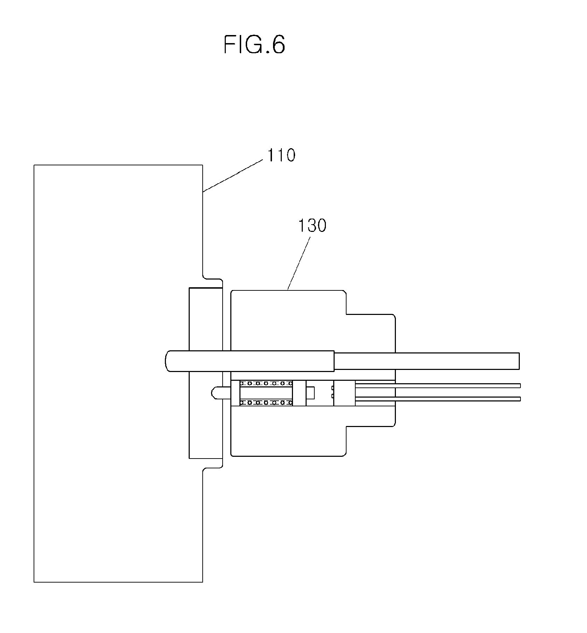

FIG. 6 is a conceptual sectional view illustrating a state that the plug according to one embodiment of the present invention is detached from a socket. With reference to FIG. 6, the plug 130 has been detached from the household socket 111 due to, for example, a user's carelessness during the charging operation. This stage corresponds to a state that the movable part 413 has been detached from the contact part 430 to deactivate the contact and thus block the power source from the plug 130. As a result, the detachment recognition signals of the plug 130 should be produced.

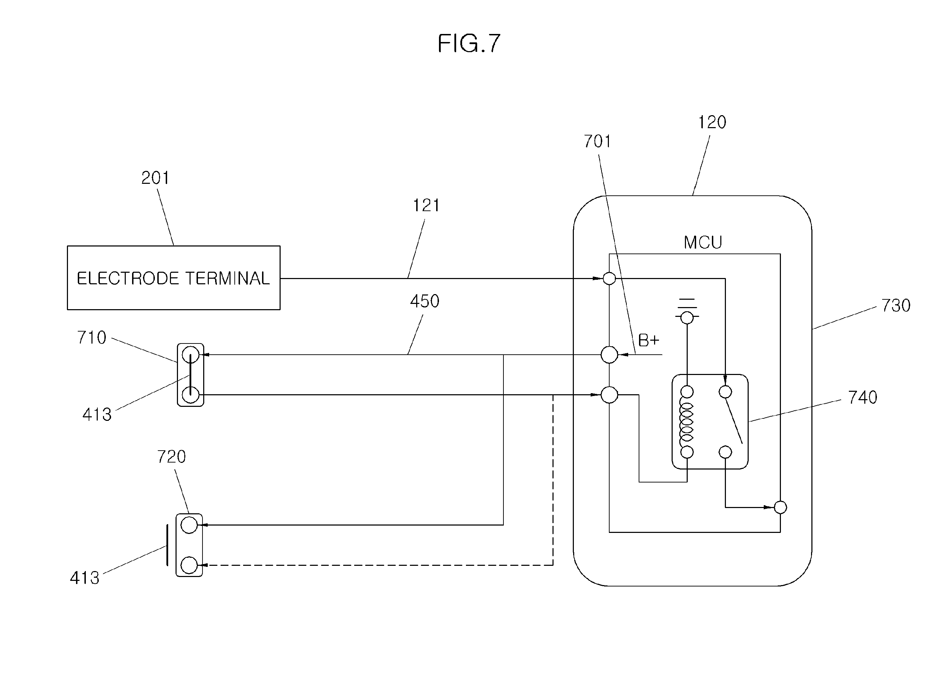

FIG. 7 is a circuit-structural view illustrating a circuit of the apparatus for blocking high voltage source according to one embodiment of the present invention. With reference to FIG. 7, the circuit breaker 120 includes a switch 740 connected to battery power lines 701 of the vehicle, for connecting or blocking the power source supplied to the vehicle from the electrode terminal 201 of the plug 130, an MCU (Micro Control Unit) 730 connected to the plug 130 through the plug pin signal lines 450, for controlling on/off of the switch 740 in response to the insertion recognition signal or the detachment recognition signal, and so forth.

More specifically, if under an activated contact state 710, then the switch 740 is turned on to supply the power source to the vehicle through the electrode terminal 201.

On the contrary, if under a deactivated contact state 720, then the switch 740 is turned off to block the power source from the electrode terminal 201.

The switch 740 may include a power relay, to which, however, the switch 740 is not limited, but may include semiconductor switching devices such as an FET (Field Effect Transistor), a MOSFET (Metal Oxide Semiconductor FET), an IGBT (Insulated Gate Bipolar Mode Transistor) and so forth, or circuits such as a TRIAC (Triode for Alternating Current), an SCR (Silicon Controlled Rectifier), IC (Integrated Circuit) and so forth. For example, the semiconductor device may include bipolar devices, power MOSFET (Metal Oxide Silicon Field Effect Transistor) devices and so forth. Unlike general MOSFETs, the power MOSFET devices which are driven with high voltages and high currents have a structure of DMOS (Double-Diffused Metal Oxide Semiconductor).

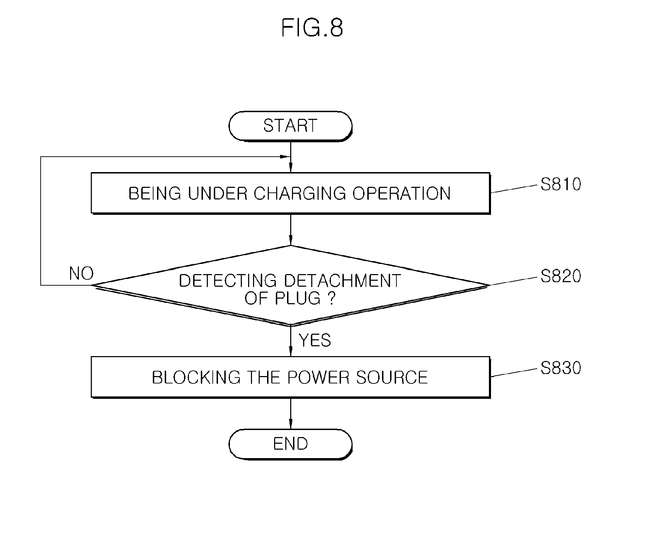

FIG. 8 is a flow chart illustrating processes through which the detachment of the plug according to one embodiment of the present invention is detected to block the electric power source. With reference to FIG. 8, the slow charging operation is performed as the plug 130 (see FIG. 1) is inserted into the household socket 111 (see FIG. 1) (Step S810).

During such slow charging operation, the circuit breaker 120 (see FIG. 1) connected to the plug 130 through the power cable 121 (see FIG. 1) detects whether or not the plug is detached from the household socket 111 (Step S820).

If the detachment is not detected in Step 820, then the circuit breaker 120 continues to supply the power source to the vehicle through the plug 130.

On the contrary, if the detachment is detected in Step 820, then the circuit breaker 120 block the power source supplied to the vehicle from the plug 130 (Step S830).

In accordance with one embodiment of the present invention, even though a plug is randomly or carelessly detached from the corresponding socket during charging operation in home, such a detachment can be detected to quickly block the electric power source and thus prevent the occurrence of arc therein.

Further, the present invention also provide another working effect that the quick blocking of the power source due to the detachment of the plug can make it possible to prevent damage of the related parts caused by the occurrence of arc, and/or user safety problem, so that the charging safety can be improved .

While the present invention has been described with respect to the specific embodiments, it will be apparent to those skilled in the art that various changes and modifications may be made without departing from the spirit and scope of the invention as defined in the following claims.

## Claims

1. An apparatus for blocking a high voltage source, comprising:
a plug(130) configured to be inserted into a household socket(111); and
a circuit breaker(120) connected to the plug(130) through a power cable(121), the circuit breaker(120) detecting whether or not the plug(130) is detached from the household socket during a slow charging operation, in order to block the power source supplied to a vehicle from the plug(130).

2. The apparatus of claim 1, wherein:
when inserted into the household socket, the plug activates a contact to transfer insertion recognition signals to the circuit breaker, whereas when detached from the household socket, the plug deactivates the contact to transfer detachment recognition signals to the circuit breaker.

3. The apparatus of claim 2, wherein the plug comprises:
an electrode terminal(201);
a plug pin(410) having a protruding part(411) formed on one end of the plug pin, the protruding part(411) configured to contact a surface of the household socket, and the plug pin being disposed on a lower end of one side of the electrode terminal;
an elastic member(420) disposed on a step part(411) of the protruding part so as to provide elastic force to the plug pin which can be reciprocally moved by the elastic force in a transverse direction; and
a contact part(430) for being contacted with or detached from the other end of the plug pin to activate or deactivate the contact.

4. The apparatus of claim 2, wherein the circuit breaker comprises:
a switch(740) connected to a vehicle battery power line(701), the switch provided for blocking or connecting the power source supplied to the vehicle from the plug; and
a controller(730) connected to the plug through a plug pin signal line(450), the controller configured to control on/off of the switch in response to the insertion recognition signals or the detachment recognition signals.

5. The apparatus of claim 4, wherein the switch comprises a power relay.

6. The apparatus of claim 3, wherein the elastic member comprises a spring.

7. A plug applied to an apparatus for blocking a high voltage source, comprising:
an electrode terminal(201);
a plug pin(410) having a protruding part formed on one end of the plug pin, the protruding part configured to contact a surface of the household socket(111), and the plug pin being disposed on a lower end of one side of the electrode terminal;
an elastic member(420) disposed on a step part of the protruding part so as to provide elastic force to the plug pin which can be reciprocally moved by the elastic force in a transverse direction; and
a contact part(430) for being contacted with or detached from the other end of the plug pin to activate or deactivate the contact.

8. The plug of claim 7, wherein the elastic member comprises a spring.

9. A method for blocking high voltage source, comprising:
performing a slow charging operation while a plug is inserted into a household socket(S810);
detecting, by a circuit breaker connected to the plug through a power cable, whether or not the plug is detached from the household socket(S820);
continuously supplying, by the circuit breaker, the power source to a vehicle through the plug, if the detachment is not detected(S810); and
blocking the power source supplied to the vehicle from the plug, if the detachment is detected(S830).

10. The method of claim 9, wherein when inserted, the plug activates a contact to transfer insertion recognition signals to the circuit breaker, whereas when detached, the plug deactivates the contact to transfer detachment recognition signals to the circuit breaker.

11. The method of claim 10, wherein the plug comprises:
an electrode terminal(201);
a plug pin(410) having a protruding part formed on one end of the plug pin, the protruding part configured to contact a surface of a household socket(111), and the plug pin being disposed on a lower end of one side of the electrode terminal(201);
an elastic member(420) disposed on a step part of the protruding part so as to provide elastic force to the plug pin which can be reciprocally moved by the elastic force in a transverse direction; and
a contact part(430) for being contacted with or detached from the other end of the plug pin to activate or deactivate the contact.

12. The method of claim 10, wherein the circuit breaker comprises:
a switch(740) connected to a vehicle battery power line, for blocking or connecting the power source supplied to the vehicle from the plug; and
a controller(730) connected to the plug through a plug pin signal line, the controller configured to control on/off of the switch in response to the insertion recognition signals or the detachment recognition signals.

13. The method of claim 12, wherein the switch comprises a power relay.

14. The method of claim 11, wherein the elastic member comprises a spring.
